# DEMANDE DE BREVET EUROPEEN

(11) **EP 4 691 743 A1**
(43) Date de publication de la demande: **11.02.2026**
(21) Numéro de dépôt: 25193036.8
(22) Date de dépôt: 31.07.2025
(51) Int. Cl.: B29C 70/22, B29C 70/34, B29D 99/00

(54) **PROCÉDÉ DE FABRICATION D'UN PROFILÉ EN MATÉRIAU COMPOSITE COMPORTANT UN REVÊTEMENT PIGMENTÉ, PROFILÉ OBTENU À PARTIR DUDIT PROCÉDÉ**

(30) Priorité: 05.08.2024 FR 2408638
(71) Demandeur: Airbus SAS, 31700 Blagnac Cedex (FR)
(72) Inventeur: PRIDIE, Jago, 17300 ROCHEFORT (FR)
(74) Mandataire: Fantin, Laurent

(57) **Abrégé**

L'invention a pour objet un procédé de fabrication d'un profilé en matériau composite comprenant une étape d'obtention d'une préforme ainsi qu'une étape de mise en place d'au moins une couche pigmentée sur la préforme, la couche pigmentée comportant au moins un film pigmenté et au moins une structure support (44) qui présente une structure tricotée (44.1).

La structure tricotée (44.1) étant souple, il est possible d'obtenir des profilés avec des géométries complexes.

L'invention a également pour objet un profilé obtenu à partir d'un tel procédé ainsi qu'un panneau raidi comprenant au moins un tel profilé.

## Description

La présente demande se rapporte à un procédé de fabrication d'un profilé en matériau composite comportant un revêtement pigmenté, à un profilé en matériau composite obtenu à partir de ce procédé ainsi qu'à un panneau raidi réalisé à partir d'un tel profilé.

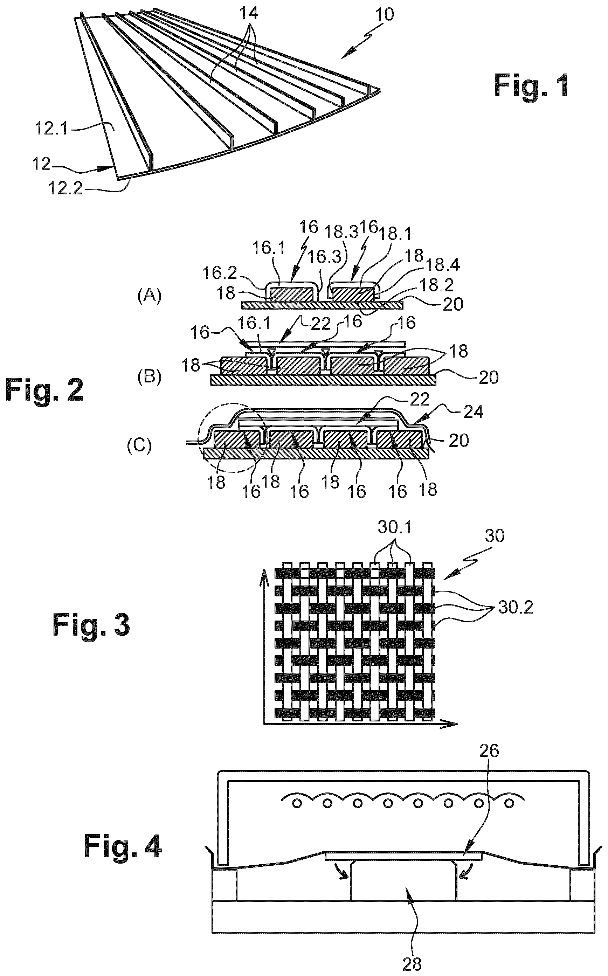

Selon un mode de réalisation visible sur la figure 1, un panneau raidi 10 comprend une paroi 12 qui présente des première et deuxième faces 12.1, 12.2 ainsi qu'une pluralité de raidisseurs 14 sensiblement parallèles entre eux, perpendiculaires à la paroi 12 et positionnés sur la première face 12.1.

Selon un mode opératoire visible sur la figure 2, un procédé de fabrication d'un panneau raidi en matériau composite comprend une étape de fabrication de profilés 16 en U ou en L en matériau composite, une étape de pose de mandrins 18 supportant chacun un profilé 16 sur une surface de pose 20 comme illustré sur la partie (A) de la figure 2, les bases 16.1 des profilés 16 étant sensiblement parallèles à la surface de pose 20 et écartées de cette dernière, une étape de pose d'une peau 22 en matériau composite sur les bases 16.1 des profilés 16 comme illustré sur la partie (B) de la figure 2, une étape de mise en place d'un outillage de polymérisation ou de consolidation 24 comme illustré sur la partie (C) de la figure 2 et une étape de polymérisation ou de consolidation.

Lors de l'étape de pose des mandrins 18, ces derniers sont posés sur la surface de pose 20 et accolés les uns aux autres afin de plaquer une première aile 16.2 d'un profilé 16 d'un premier mandrin 18 contre une deuxième aile 16.3 d'un profilé 16 d'un deuxième mandrin 18, les première et deuxième ailes 16.2, 16.3 formant, après l'étape de polymérisation ou de consolidation, un raidisseur 14 du panneau raidi 10.

Selon un mode de réalisation, un procédé d'obtention d'un profilé en U comprend une étape d'empilement de plis de fibres structuraux à plat pour former une préforme plane 26, une étape de déformation de la préforme plane 26 sur un moule 28 de manière à plier les deux ailes 16.2, 16.3 du profilé 16 en U, comme illustré sur la figure 4, puis une étape de durcissement au moins partielle de la préforme pliée. Ce procédé peut comprendre d'autres étapes comme une étape de compactage après l'étape de déformation, une étape de découpe et une étape de protection des bords libres des ailes 16.2, 16.3 préalablement à l'étape de durcissement.

Selon un mode opératoire, les profilés 16 sont soumis à un procédé de contrôle non destructif pour contrôler leur conformité.

Pour fiabiliser les mesures du contrôle non destructif et éviter que le faisceau d'ondes utilisé pour le contrôle non destructif ne soit réfléchi, au moins une surface du profilé est recouverte d'un revêtement pigmenté après l'étape de durcissement, favorisant l'absorption du faisceau d'ondes.

L'étape de séchage de ce revêtement est relativement longue, ce qui allonge de manière significative la durée de fabrication des profilés 16.

Pour remédier à cet inconvénient, le document FR3059591 propose un procédé d'obtention d'un profilé qui comprend une étape d'empilement de plis de fibres structuraux à plat pour former une préforme plane 26, une étape de mise en place d'une couche pigmentée sur la préforme plane 26, une étape de déformation de la préforme plane 26 revêtue de la couche pigmentée sur un moule 28 de manière à plier les deux ailes du profilé puis une étape de durcissement de la préforme pliée et revêtue de la couche pigmentée. Ce procédé peut comprendre d'autres étapes comme une étape de compactage après l'étape de déformation, une étape de découpe et une étape de protection des bords libres du profilé préalablement à l'étape de durcissement.

Selon ce mode opératoire, après l'étape de durcissement du profilé revêtu de la couche pigmentée, cette dernière présente les mêmes avantages que le revêtement peint après l'étape de durcissement du profilé. La couche pigmentée étant durcie simultanément aux plis de fibres structuraux du profilé et non lors d'une étape supplémentaire, ce mode opératoire permet de réduire la durée de fabrication.

Selon un mode de réalisation, la couche pigmentée comprend un film de peinture extrêmement fin qui présente une épaisseur inférieure ou égale à 50 µm. Pour pouvoir facilement manipuler ce film de peinture sans l'endommager, la couche pigmentée comprend une structure de fibres tissées 30 supportant le film de peinture.

Selon une configuration de l'art antérieur visible sur la figure 3, la structure de fibres tissées 30 comprend des fils de chaîne et de trame 30.1, 30.2 tissés selon un tissage en toile. Selon ce type de tissage, chaque fil de trame 30.2 passe alternativement au-dessus puis au-dessous de chaque fil de chaîne 30.1 pour obtenir un motif carré. Chacun des fils de chaîne et de trame 30.1, 30.2 est orienté approximativement de manière rectiligne.

Même si ce mode d'obtention d'un profilé utilisant une couche pigmentée qui associe un film de peinture et une structure de fibres tissées 30 permet de réduire significativement la durée de fabrication, il n'est pas pleinement satisfaisant car il est réservé aux profilés qui présentent une surface de pose de la couche pigmentée développable et peuvent difficilement être mis en œuvre si la surface de pose ne l'est pas.

La présente invention vise à remédier à tout ou partie des inconvénients de l'art antérieur.

A cet effet, l'invention a pour objet un procédé de fabrication d'un profilé en matériau composite comprenant une étape d'obtention d'une préforme ainsi qu'une étape de mise en place d'au moins une couche pigmentée sur la préforme, la couche pigmentée comportant au moins un film pigmenté et au moins une structure support qui présente une face contre laquelle est appliqué le film pigmenté.

Selon l'invention, la structure support de la couche pigmentée présente une structure tricotée.

Une structure tricotée étant plus souple qu'une structure tissée, il est possible, à partir du procédé de l'invention, d'obtenir des profilés avec des géométries complexes.

Selon une autre caractéristique, la structure tricotée est une structure tricotée à chaîne. Selon une autre caractéristique, la structure tricotée est une structure tricotée à trame.

Selon une autre caractéristique, la préforme est conformée avant l'étape de mise en place de la couche pigmentée, le procédé comprenant une étape de conformation de la couche pigmentée avant l'étape de mise en place de la couche pigmentée sur la préforme conformée. Selon une autre caractéristique, le film pigmenté est appliqué à plat contre la structure support à plat, puis le film pigmenté et la structure support plaqués l'un contre l'autre sont cuits puis déformés simultanément.

Selon une autre caractéristique, la structure support et le film pigmenté sont soumis, lors de leur déformation, à une température de mise en forme supérieure à la température de transition vitreuse du film pigmenté.

L'invention a également pour objet un profilé en matériau composite obtenu à partir d'un procédé de fabrication selon l'une des caractéristiques précédentes ainsi qu'un panneau raidi obtenu à partir d'un tel profilé.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un panneau raidi,
- La figure 2 est une représentation schématique de différentes étapes de fabrication d'un panneau illustrant un mode de réalisation de l'art antérieur,
- La figure 3 est une vue de face d'une partie d'une structure de fibres tissées illustrant un mode de réalisation de l'art antérieur,
- La figure 4 est une représentation schématique d'un outillage de mise en forme d'une préforme plane pour obtenir un profilé en U,
- La figure 5 est une vue de face d'une partie d'une structure tricotée illustrant un mode de réalisation de l'invention,
- La figure 6 est une vue de face d'une partie d'une structure tricotée illustrant un autre mode de réalisation de l'invention,
- La figure 7 est une représentation schématique de différentes étapes de mise en forme d'une couche pigmentée,
- La figure 8 est une représentation schématique d'un outillage d'obtention d'un profilé illustrant un mode de réalisation de l'invention,
- La figure 9 est une représentation en perspective de différents profilés obtenus à partir du procédé de l'invention.

Selon un mode opératoire, un procédé de de fabrication d'un panneau raidi en matériau composite comprend une étape de fabrication de profilés en U ou en L en matériau composite, une étape de pose de mandrins supportant chacun un profilé sur une surface de pose, les bases des profilés étant sensiblement parallèles à la surface de pose et écartées de cette dernière, une étape de pose d'une peau en matériau composite sur les bases des profilés, une étape de mise en place d'un outillage de polymérisation ou de consolidation et une étape de polymérisation ou de consolidation.

Selon une application, un aéronef comprend au moins un panneau raidi obtenu à partir de ce procédé. A titre d'exemple, un caisson central de voilure d'un aéronef comprend au moins un panneau raidi obtenu à partir de ce procédé.

Le procédé de fabrication d'un panneau raidi n'est pas plus décrit car, à l'exception de l'étape de fabrication du profilé, il peut être identique à celui de l'art antérieur.

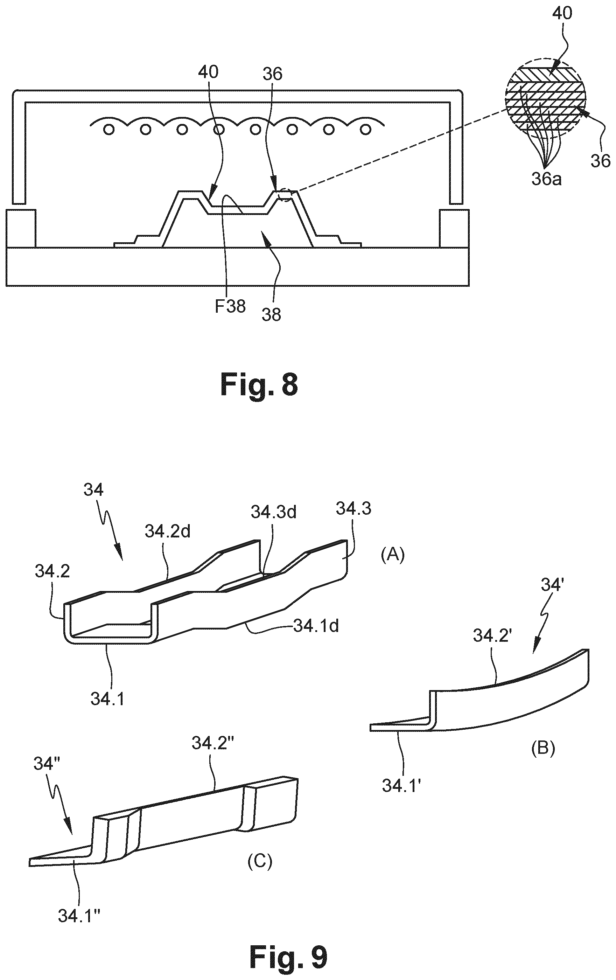

Selon un mode de réalisation visible sur la figure 8, un procédé d'obtention d'un profilé 34 (visible sur la figure 9) comprend une étape d'empilement de plis de fibres structuraux 36a sur un moule 38 de manière à obtenir une préforme conformée 36. Le moule 38 comporte une surface d'empilement F38 qui présente une géométrie approximativement identique à celle du profilé 34 à l'issue du procédé d'obtention. Dans le cas d'un profilé 34 avec une géométrie non développable, la surface d'empilement F38 présente également une géométrie non développable.

Ce procédé peut comprendre d'autres étapes comme une étape de compactage pendant ou après l'étape d'empilement, une étape de découpe et une étape de protection des bords libres de la préforme conformée préalablement à une étape de durcissement.

Les étapes d'empilement et de durcissement ne sont pas plus décrites car elles peuvent être identiques à celles de l'art antérieur.

Selon les cas, la préforme conformée peut avoir une section transversale en U, en L ou autres. Lorsque le profilé est utilisé pour réaliser un panneau raidi, selon une première variante, l'étape de durcissement de la préforme conformée peut être réalisée avant l'étape de pose du mandrin supportant la préforme conformée sur la surface de pose. Selon un premier cas, la préforme conformée peut être partiellement polymérisée ou consolidée avant l'étape de pose, la fin de la polymérisation ou de la consolidation étant réalisée simultanément à celle de la peau. Selon un deuxième cas, la préforme conformée est totalement polymérisée ou consolidée avant l'étape de pose.

Selon une autre variante, l'étape de durcissement est réalisée après l'étape de pose du mandrin supportant la préforme conformée sur la surface de pose. Dans ce cas, la préforme conformée est totalement crue lorsqu'elle est posée sur la surface de pose.

Le procédé d'obtention du profilé comprend une étape de mise en place d'au moins une couche pigmentée 40 sur la préforme avant l'étape de durcissement.

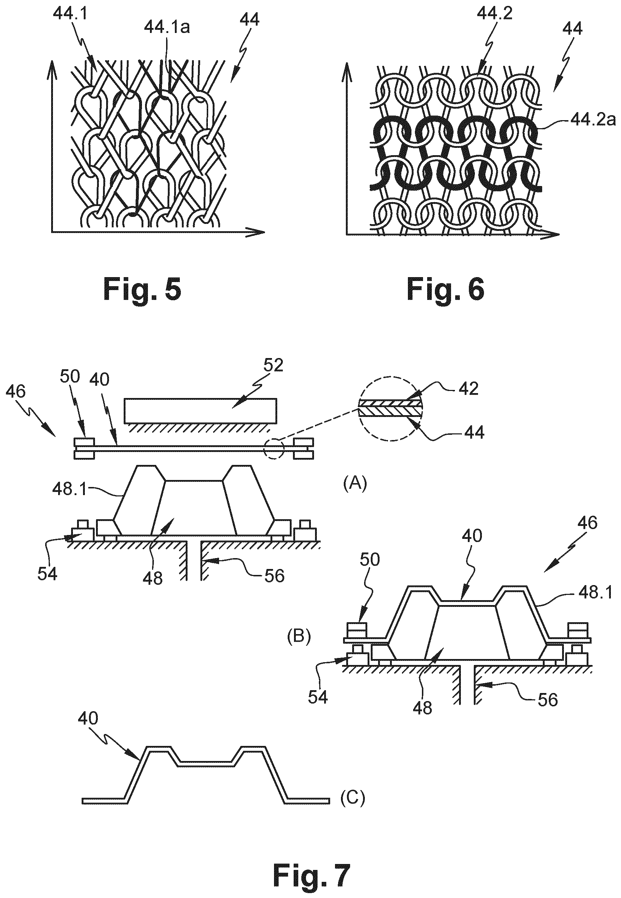

Selon un mode de réalisation visible sur la partie (A) de la figure 7, la couche pigmentée 40 comprend au moins un film pigmenté 42 et au moins une structure support 44 qui présente une face contre laquelle est appliquée la couche pigmentée 40.

Selon une configuration, le film pigmenté 42 est un film de peinture extrêmement fin qui présente une épaisseur inférieure ou égale à 50 µm. Ce film pigmenté 42 n'est pas plus décrit car il peut être identique aux films de peinture de l'art antérieur.

Selon un mode de réalisation, le film pigmenté 42 est initialement plat. Selon un mode opératoire, le film pigmenté 42 plat est positionné sur la structure support 44 également plate. En suivant, le film pigmenté 42 et la structure support 44 plaqués l'un contre l'autre sont cuits puis déformés simultanément. Le film pigmenté 42 est déformé sur la structure support 44 déjà en forme. Selon une configuration, le film pigmenté 42 présente une température de transition vitreuse Tg inférieure à la température de mise en forme. Ainsi, lors de la déformation, le film pigmenté 42 se ramollit et peut se déformer en s'adaptant à une forme tridimensionnelle non développable.

Selon un autre mode opératoire, le film pigmentée 42 est partiellement cuit avant d'être appliqué contre la structure support 44. Le film pigmentée 42 et la structure support 44 sont alors reliés par collage.

Selon un autre mode de réalisation, la couche pigmentée 40 comprend uniquement une structure support 44 imprégnée de pigments.

Selon une particularité de l'invention, la structure support 44 est une structure tricotée 44.1, 44.2, comme illustré sur les figures 5 et 6. Ainsi, la structure tricotée 44.1, 44.2 comprend des boucles de fils interconnectées. Ce type de structure est plus souple qu'une structure tissée et peut se conformer sur une surface non développable et sans plis, contrairement à une structure tissée.

Selon un premier mode de réalisation visible sur la figure 5, la structure tricotée 44.1 est une structure tricotée à chaîne. Elle comprend uniquement des fils de chaîne 44.1a positionnés dans le sens de la longueur de la structure tricotée 44.1, chacun d'eux formant des boucles entrelacées avec les boucles d'un autre fil de chaîne 44.1a de manière à former des colonnes de mailles orientées selon la longueur de la structure tricotée.

Selon une deuxième mode de réalisation visible sur la figure 6, la structure tricotée 44.2 est une structure tricotée à trame. Elle comprend uniquement des fils de trame 44.2a positionnés dans le sens de la largeur de la structure tricotée, chacun d'eux formant des boucles entrelacées avec les boucles d'un autre fil de trame 44.2a de manière à former des rangées de mailles orientées selon la largeur de la structure tricotée.

Comme la structure de fibres tissées de l'art antérieur, la structure tricotée 44.1, 44.2 protège le film pigmenté 42. Contrairement à la structure de fibres tissées 30 de l'art antérieur qui ne peut se conformer sans plis que sur une surface développable, la structure tricotée 44.1, 44.2 peut se conformer sans plis sur une surface non développable. Ainsi, grâce à la structure tricotée 44.1, 44.2, il est possible d'obtenir des profilés 34, 34, 34" en U ou en L avec des géométries complexes.

Selon un mode de réalisation visible sur la partie (A) de la figure 9, un profilé en U 34 comprend une base 34.1 ainsi que deux ailes 34.2, 34.3, la base 34.1 et les bords supérieurs des ailes 34.2, 34.3 comprennent chacun un décrochement 34.1d, 34.2d, 34.3d.

Selon un autre mode de réalisation visible sur la partie (B) de la figure 9, un profilé en L 34' comprend des première et deuxième ailes 34.1', 34.2' courbes.

Selon un autre mode de réalisation visible sur la partie (C) de la figure 9, un profilé en L 34" comprend des première et deuxième ailes 34.1", 34.2", la deuxième aile 34.2" ayant une épaisseur non constante.

Bien entendu, l'invention n'est pas limitée à ces modes de réalisation pour le profilé.

Selon un mode opératoire, le procédé d'obtention d'un profilé 34 comprend une étape d'obtention d'une préforme 36 qui présente un empilement de plis structuraux 36a et une surface à recouvrir d'une couche pigmentée 40, une étape d'obtention d'une couche pigmentée 40 conformée approximativement comme la surface à recouvrir de la préforme 36, une étape de mise en place de la couche pigmentée 40 sur la préforme 36 et une étape de co-cuisson de la préforme 36 et de la couche pigmentée 40 de manière à obtenir un profilé 34 au moins partiellement revêtu d'une couche pigmentée 40.

Selon un mode de réalisation plus particulièrement adapté pour un profilé 34 qui présente une géométrie non développable, lors de l'étape d'obtention de la préforme 36, cette dernière est conformée comme le profilé 34 à obtenir, les plis structuraux 36a étant posés sur une surface d'empilement F38 qui présente une géométrie approximativement identique à celle du profilé 34 à obtenir.

En parallèle, lors de l'étape d'obtention d'une couche pigmentée 40 conformée, le film pigmenté 42 est appliqué à plat contre la structure support 44 également à plat. En suivant, le film pigmenté 42 et la structure support 44 sont cuits puis déformés simultanément. Lors de cette déformation, la structure support 44 et le film pigmenté 42 sont soumis à une température de mise en forme supérieure à la température de transition vitreuse Tg du film pigmenté 42, ce qui permet à ce dernier de se conformer selon une géométrie non développable et assure une cohésion importante entre la structure support 44 et le film pigmenté 42. La structure support 44 étant une structure tricotée, elle peut se conformer selon une géométrie non développable.

Quel que soit le mode de réalisation, le profilé en matériau composite obtenu comprend en surface une couche pigmentée 40 comportant un film pigmenté 42 rapporté sur une structure support 44 qui présente une structure tricotée 44.1, 44.2.

Selon un mode de réalisation visible sur la figure 7, un outillage de conformation 46 de la couche pigmentée 40 comprend au moins un moule 48 comportant une surface de pose 48.1 qui présente une géométrie identique à celle de la surface de la préforme conformée 36 contre laquelle doit être posée la couche pigmentée 40, au moins un support 50 configuré pour supporter la couche pigmentée 40 plane et la plaquer contre le moule 48. Selon une configuration, l'outillage de conformation 46 comprend un système de chauffe 52 configuré pour chauffer la couche pigmentée 40 afin de la ramollir de manière à ce qu'elle épouse la surface de pose 48.1 et/ou la cuire. Selon un agencement, le support 50 est un cadre et le système de chauffe 52 est positionné au-dessus du moule 48. Ce dernier comprend un système d'étanchéité 54 autour de la surface de pose 48.1 ainsi qu'un système d'aspiration 56 configuré pour aspirer le gaz présent entre le moule 48 et la couche pigmentée 40 et la plaquer contre la surface de pose 48.1. Selon un mode opératoire, la couche pigmentée 40 est reliée au support 50 positionné entre le moule 48 et le système de chauffe 52 comme illustré sur la partie (A) de la figure 7. En suivant, le système de chauffe 52 est activé pour ramollir la couche pigmentée 40. Lorsque cette dernière est suffisamment ramollie, le support 50 est déplacé en direction du moule 48 jusqu'à ce que la couche pigmentée 40 soit en contact avec le système d'étanchéité 54. Lors de ce déplacement, la couche pigmentée 40 ramollie se déforme contre la surface de pose 48.1. Comme illustré sur la partie (B) de la figure 7, le système d'aspiration 56 est activé de manière à ce la couche pigmentée 40 épouse la surface de pose 48.1. Après une durée déterminée, les systèmes de chauffe 52 et d'aspiration 56 sont désactivés. Après une période de refroidissement, la couche pigmentée 40 déformée est écartée du moule 48 et détachée du support 50, comme illustré sur la partie (C) de la figure 7. Selon un mode opératoire, le film pigmenté 42 est cuit lorsqu'il est plat avant d'être déformé.

## Revendications

1. Procédé de fabrication d'un profilé en matériau composite comprenant une étape d'obtention d'une préforme (36) ainsi qu'une étape de mise en place d'au moins une couche pigmentée (40) sur la préforme, la couche pigmentée (40) comportant au moins un film pigmenté (42) et au moins une structure support (44) qui présente une face contre laquelle est appliqué le film pigmenté (42) ; **caractérisé en ce que** la structure support (44) de la couche pigmentée (40) présente une structure tricotée (44.1, 44.2).

2. Procédé de fabrication selon la revendication 1, **caractérisé en ce que** la structure tricotée (44.1) est une structure tricotée à chaîne.

3. Procédé de fabrication selon la revendication 1, **caractérisé en ce que** la structure tricotée (44.2) est une structure tricotée à trame.

4. Procédé de fabrication selon l'une des revendications précédentes, **caractérisé en ce que** la préforme (36) est conformée avant l'étape de mise en place de la couche pigmentée (40) et **en ce que** le procédé comprend une étape de conformation de la couche pigmentée (40) avant l'étape de mise en place de la couche pigmentée (40) sur la préforme (36) conformée.

5. Procédé de fabrication selon la revendication précédente, **caractérisé en ce que** le film pigmenté (42) est appliqué à plat contre la structure support (44) à plat, le film pigmenté (42) et la structure support (44) plaqués l'un contre l'autre étant en suivant cuits puis déformés simultanément.

6. Procédé de fabrication selon la revendication précédente, **caractérisé en ce que** le film pigmenté (43) présente une température de transition vitreuse (Tg) et **en ce que** la structure support (44) et le film pigmenté (42) sont soumis, lors de leur déformation, à une température de mise en forme supérieure à la température de transition vitreuse (Tg) du film pigmenté (42).

7. Profilé en matériau composite obtenu à partir d'un procédé de fabrication selon l'une des revendications précédentes, ledit profilé comprenant une structure support (44), sur laquelle est rapporté un film pigmenté (42), qui présente une structure tricotée (44.1, 44.2).

8. Panneau raidi obtenu à partir de profilés selon la revendication 7.
